# EUROPEAN PATENT APPLICATION

(11) **EP 0 808 741 A1**
(43) Date of publication of application: **26.11.1997**
(21) Application number: 97830150.5
(22) Date of filing: 28.03.1997
(51) Int. Cl.: B60N 2/20

(54) **Front seat for a two-door car with a backrest unlocking lever on the headrest**

(30) Priority: 20.05.1996 IT TO960417
(71) Applicant: LEAR CORPORATION ITALIA S.p.A., 10128 Torino (IT)
(72) Inventor: Bouhours, Daniel, 10128 Torino (IT)
(74) Representative: Notaro, Giancarlo

(57) **Abstract**

A front seat for a two-door car, of the type comprising a backrest (1) which can be rotated forwardly to allow access to the rear seats, is provided with a lever (2) for unlocking the backrest which is rotatably mounted on one of the two headrest (3) supporting rods (4) and has one handling end (2c) arranged out of the headrest (3) and on one side thereof.

## Description

The present invention relates to motor-vehicle seats and in particular to a front seat for a two-door car, of the type comprising a backrest which is provided with a headrest and rotatable forwardly to enable access to the rear seats, in which said headrest is provided at its lower portion with two supporting rods which are received within two co-operating bushes provided at the top of the backrest, and in which said backrest is provided with a lever for actuating a flexible cable for disabling means that lock the backrest in the position of normal use.

In order to provide a convenient and easy operation of said lever for unlocking the backrest, while having a relatively simple and inexpensive structure, the invention provides a seat of the above indicated type, characterized in that said actuating lever is rotatably supported on one of the headrest supporting rods and extends outwardly, through the gap between the top of the backrest and the headrest, ending with one handling end which is located at the outside and on one side of the headrest.

Due to said features, the lever is located at a position which can be conveniently reached by the user and can be operated by a rotational movement, around said headrest supporting rod, which is also convenient and easy. At the same time, the structure of the device according to the invention is extremely simple and reliable.

Further features and advantages of the invention will become apparent from the following description with reference to the annexed drawings, given purely by way of non-limiting example, in which:
figure 1 is a perspective view of the top portion of the backrest of a seat according to the invention,
figure 2 is a partial view, in cross-section and at an enlarged scale of a detail of figure 1,
figure 3 is a variant of figure 2, and
figure 4 is a cross-sectional view taken along line IV-IV of figure 2.

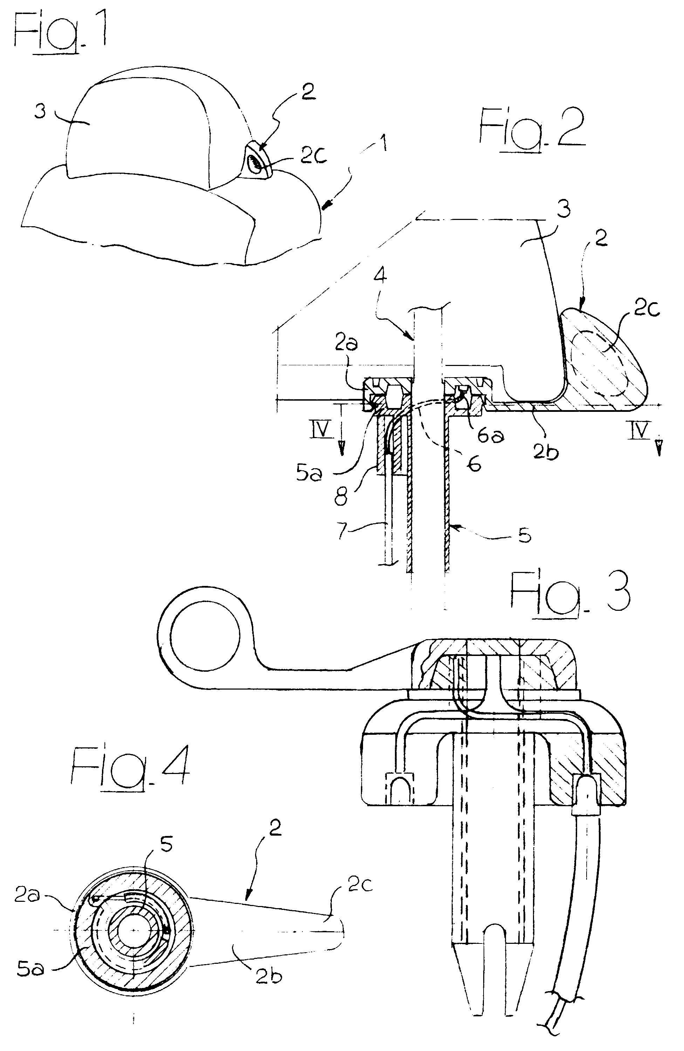

In figure 1, reference numeral 1 designates a backrest of a two-door car seat, of the type which can be rotated forwardly to allow access to the rear seats. According to the conventional technique, there are provided means for locking the backrest in the position of normal use (not shown) and to the backrest there is further associated an actuating lever which controls a flexible cable transmission adapted to disengage the backrest locking means.

In the case of the present invention, the actuating lever, generally designated by 2, is associated with the headrest 3 provided above the backrest 1.

More in detail, with reference to figure 2, the headrest 3 is provided, in a way known per se, with two vertical supporting rods 4 (only one of which is visible in figure 2), which project downwardly from the body of the headrest 3 and are slidably received within bush 5 of plastic material provided within the backrest and opening on the upper surface of this backrest. According to the invention, the actuating lever 2 is rotatably mounted on one of the two supporting rods 4 of the headrest (preferably that located on the side of the seat facing outwardly of the motor-vehicle). The actuating lever 2 has a body including a disk 2a rotatably mounted on rod 4, from which there extends a flat appendage 2b which is located through the gap between the top surface of backrest 1 and the lower surface of headrest 3 and ends with a handling end 2c located out of the headrest 3 and immediately adjacent to one side thereof, so that it can be easily reached by the user. To disk 2a there is fixed the end 6a of a flexible metal cable 6 which is wound within disk 2a and is guided through a sheath 7 whose end is anchored to an appendage 8 of the body of plastic material of bush 5. At the opposite end, the flexible cable transmission constituted by cable 6 and sheath 7 controls, in a way known per se, the disengagement of means (not shown) which locks the backrest in its position of normal use. The actuating lever 2 is biased towards a rest position (shown in figure 3) by the spring means (also not shown) which are associated with the backrest locking means and acts on lever 2 through the flexible cable 6. Naturally, however, it would be possible to provide also a return spring for lever 2 directly associated with the latter, e.g. at disk 2a. With reference to figure 3, starting from the rest position shown therein, the lever 2 can be rotated in a clockwise direction, i.e. forwardly, to cause the unlocking of the backrest.

In the embodiment shown in figure 2, the upper end of the plastic bush 5 has a disk 5a on whose edge there is fitted a circumferential edge of disk 2a, so that the letter is rotatable around the axis of rod 4.

Naturally, while the principle of the invention remains the same, the details of construction and the embodiments may widely vary with respect to what has been described and illustrated purely by way of example, without departing from the scope of the present invention.

## Claims

1. Motor-vehicle seat, in particular front seat for a two-door car, comprising a backrest (1) which is provided with a headrest (3) and is rotatable forwardly to allow access to the rear seats, in which said headrest (3) is provided at its lower part with two supporting rods (4) received within two co-operating bushes (5) provided at the top of the backrest (1), and in which said backrest (1) is provided with a lever (2) for actuating a flexible cable (6) for disabling means which locks the backrest in its position of normal use,
characterized in that said lever (5) is rotatably supported on one of the headrest (3) supporting rods (4) and extends outwardly through the gap between the top of the backrest (1) and the headrest (3), ending with one handling end (2c) arranged out of the head rest and on one side thereof.

2. Seat according to claim 1, characterized in that the actuating lever (2) has a body including a disk (2a) rotatably mounted on a headrest (3) supporting rod (4) and a flat appendage (2b) extending from the disk (2a) and ending with said handling end (2c).

3. Seat according to claim 2, characterized in that said disk (2a) has a peripheral edge which is rotatably mounted on a co-operating disk (5a) forming part of a body of plastic material including the respective bush (5) within which there is received said supporting rod (4).
